# EUROPÄISCHE PATENTANMELDUNG

(11) **EP 2 116 649 A2**
(43) Veröffentlichungstag der Anmeldung: **11.11.2009**
(21) Anmeldenummer: 08019337.8
(22) Anmeldetag: 05.11.2008
(51) Int. Cl.: E02B 8/02

(54) **Rechenvorrichtung mit einer Einrichtung zur Räumung des Rechenguts**

(30) Priorität: 05.05.2008 DE 102008022167
(71) Anmelder: Steinhardt, Jörg-Michael, Dipl.-Ing., 65232 Taunusstein (DE)
(72) Erfinder: Steinhardt, Jörg-Michael, Dipl.-Ing., 65232 Taunusstein (DE)
(74) Vertreter: Quermann, Helmut

(57) **Zusammenfassung**

Die Erfindung betrifft eine Rechenvorrichtung (9) mit einer Einrichtung (19) zur Räumung von Rechengut, insbesondere zur Rückhaltung von in einem Abwasser mitgeführten Feststoffen an Entlastungen, ferner mit einem Antrieb (22) für die Einrichtung (19) zur Räumung des Rechenguts, wobei die Einrichtung (19) zur Räumung des Rechenguts in Strömungsrichtung des Abwassers vor einer Überfallwand (5) angeordnet ist und die Rechenvorrichtung (9) von unten nach oben vom Abwasser durchströmt wird.

Bei einer solchen Rechenvorrichtung ist erfindungsgemäß vorgesehen, dass die Einrichtung (19) zur Räumung des Rechenguts fremdenergiefrei über ein Wasserrad (22) antreibbar ist, wobei das Wasserrad (22) in Strömungsrichtung des Abwassers hinter der Überfallwand (5) angeordnet ist.

Die Rechenvorrichtung weist einen baulich besonders einfach gestalteten, robusten Antrieb für die Einrichtung zur Räumung des Rechenguts auf, wobei die Rechenvorrichtung ortsunabhängig eingesetzt werden kann und kompakt gestaltet ist.

## Beschreibung

Die Erfindung betrifft eine Rechenvorrichtung mit einer Einrichtung zur Räumung von Rechengut, insbesondere zur Rückhaltung von in einem Abwasser mitgeführten Feststoffen an Entlastungen, ferner mit einem Antrieb für die Einrichtung zur Räumung des Rechenguts, wobei die Einrichtung zur Räumung des Rechenguts in Strömungsrichtung des Abwassers vor einer Überfallwand
Unter den Eichen Tel. +49 (0)611-53178-0 e-mail: info@ip-quest.de Wiesbadener Volksbank
D-65195 Wiesbaden Fax +49 (0)611-5317811 http://www.ip-questde (BLZ 510 900 00) 75 48 907 angeordnet ist und die Rechenvorrichtung von unten nach oben vom Abwasser durchströmt wird.

Eine derartige Rechenvorrichtung ist aus der DE 42 15 002 A1 bekannt. Bei dieser weist die Rechenvorrichtung eine Vielzahl parallel angeordneter Stäbe auf, mit einem Stababstand von mehreren Millimetern. Die Einrichtung zur Räumung des Rechenguts zwischen den Rechenstäben weist mittels des Antriebs verfahrbare Abstreifer auf, die zwischen den Rechenstäben angeordnet und zum Austragen des Rechenguts zwischen den Stabenden hin und her verfahrbar sind. Die Stäbe des Rechens sind gerade ausgebildet und horizontal angeordnet. Gelagert sind die Abstreifer in Schwenkhebeln, die um eine oberhalb der Stäbe angeordnete Achse schwenkbar sind. Verschwenkt werden die Stäbe mittels einer in einer oberen Traverse eines Rahmens der Rechenvorrichtung gelagerten Antriebseinheit, die aus einem Motor und einem Getriebe besteht, wobei diese Antriebseinheit alternativ an einer Decke oder einer Wand eines ein Regenüberlaufbecken bildenden Bauwerks befestigt ist. Es wird vorgeschlagen, anstelle der Antriebseinheit einen elektrischen, pneumatischen oder hydraulischen Zylinder als Linearantrieb zu verwenden.

Nachteilig ist bei dieser Gestaltung der Rechenvorrichtung, dass das Bauwerk zur Aufnahme der Rechenvorrichtung mit der Einrichtung zur Räumung von Rechengut und mit dem Antrieb aufgrund der Anordnung des Antriebs oberhalb des maximalen Abwasserspiegels recht hoch baut und außerdem die Anordnung der Rechenvorrichtung und insbesondere des Antriebs ortsgebunden ist, weil der Antrieb Versorgungseinrichtungen für den Motor, insbesondere den Elektromotor, oder den pneumatischen bzw. hydraulischen Zylinder benötigt. Die Rechenvorrichtung kann somit nicht an einem beliebigen Ort angebracht werden. Andererseits befindet sich dieser Fremdenergieantrieb in einem Bereich der Anlage, insbesondere einer Hochwasser-Entlastungsanlage, in dem er der Feuchtigkeit ausgesetzt ist, womit eine erhöhte Gefahr von Störungen bzw. eines Ausfalls des Antriebs für die Einrichtung zur Räumung des Rechenguts einhergeht.

In der EP 1 223 252 A2 ist eine oben in einer Trennwand zwischen einem Abwasserhauptkanal und einem Seitenkanal gelagerte Siebvorrichtung beschrieben. Diese weist eine seitlich geschlossene stationäre Trommel auf, die den Hauptkanal vom Seitenkanal trennt. Die Trommel ist auf ihrer dem Hauptkanal zugewandten Seite mit einer großen Öffnung versehen, so dass über diese das Abwasser vom Hauptkanal in die Trommel eintreten kann. Auf der dem Seitenkanal zugewandten Seite ist die Trommel in ihrem unteren Bereich mit einem Sieb versehen, so dass im Abwasser mitgeführtes Gut beim Durchströmen der Trommel dort zurückgehalten wird und nur Reinwasser aus der Trommel in den Seitenkanal austreten kann. Innerhalb der Trommel ist eine Einrichtung zur Räumung des innerhalb der Trommel zurückgehaltenen Guts umlaufend gelagert. Angetrieben wird die Einrichtung mittels eines in Strömungsrichtung hinter dem Sieb angeordneten Wasserrad. Das drehende Wasserrad treibt über einen Riemen oder eine Kette die Einrichtung zur Räumung des Rechenguts im Sinne einer Rotationsbewegung an.

Rechenvorrichtungen, die ähnlich derjenigen nach der DE 42 15 002 A1 gestaltet sind, sind beispielsweise in der DE 195 15 924 A1, WO 98/31882, WO 99/49145 und WO 01/75249 A1 beschrieben.

Aufgabe der vorliegenden Erfindung ist es; eine Rechenvorrichtung der eingangs genannten Art so weiter zu bilden, dass ein baulich besonders einfach gestalteter, robuster Antrieb für die Einrichtung zur Räumung des Rechenguts geschaffen ist, wobei die Rechenvorrichtung kompakt gestaltet ist und ortsunabhängig eingesetzt werden kann.

Gelöst wird die Aufgabe durch eine Rechenvorrichtung der eingangs genannten Art, bei der die Einrichtung zur Räumung des Rechenguts fremdenergiefrei über ein Wasserrad antreibbar ist, sowie das Wasserrad in Strömungsrichtung des Abwassers hinter der Überfallwand angeordnet ist.

Da bei der erfindungsgemäßen Rechenvorrichtung die Einrichtung zur Räumung des Rechenguts vor der Überfallwand angeordnet ist und das Wasserrad, mittels dessen die Einrichtung zur Räumung des Rechenguts angetrieben wird, hinter der Überfallwand positioniert ist, kann das Bauwerk, in dem die Rechenvorrichtung angeordnet ist, eine relativ geringe Bauhöhe aufweisen. Es ist nur erforderlich, dass das Abwasser über die Überfallwand treten kann. Das Abwasser strömt von unten nach oben durch die Rechenvorrichtung und bei entsprechendem Flüssigkeitsstand über die Überfallwand und fällt von dort nach unten auf das Wasserrad, das somit rotiert und infolgedessen die Einrichtung zur Räumung des Rechenguts antreibt.

Der Antrieb mittels des Wasserrades ermöglicht es, die Einrichtung zur Räumung des Rechenguts ohne Fremdenergie anzutreiben. Es ist nicht erforderlich, einen externen Stromanschluss zum Antreiben der Einrichtung zur Räumung des Rechenguts vorzusehen. Damit kann die Rechenvorrichtung nicht nur kompakt gestaltet werden, sondern es ist der besondere Vorteil zu verzeichnen, dass die Rechenvorrichtung ortsunabhängig eingesetzt werden kann.

Durch die einfache Gestaltung der Rechenvorrichtung mit dem einfachen Antrieb mittels eines Wasserrades und das Zusammenwirken von Wasserrad und Einrichtung zur Räumung des Rechenguts kann die Rechenvorrichtung besonders einfach gestaltet werden. Insgesamt ergibt sich ein robuster Antrieb für die Einrichtung zur Räumung des Rechenguts.

Die Übertragung der Bewegung des Wasserrades auf die Einrichtung zur Räumung des Rechenguts kann auf unterschiedliche Art und Weise erfolgen, beispielsweise unmittelbar mechanisch oder indem das Wasserrad ein Kraftmittel zum Bewegen der Einrichtung zur Räumung des Rechenguts antreibt. So ist vorzugsweise vorgesehen, dass mittels des Wasserrades eine Pumpe antreibbar ist, mittels derer ein Kolben und/oder Motor der Einrichtung zur Räumung des Rechenguts antreibbar ist. Die Pumpe ist insbesondere mittels eines vom Wasserrad angetriebenen Riementriebs antreibbar.

Die Einrichtung zur Räumung des Rechenguts ist vorzugsweise als Rechengutabstreifer ausgebildet. Die Rechenvorrichtung ist insbesondere so gestaltet, dass sie eine Vielzahl von Rechenstäben aufweist und es weist die Einrichtung zur Räumung des Rechenguts zwischen den Rechenstäbe angeordnete, verfahrbare Abstreifer auf. Zweckmäßig ist mittels des Wasserrades ein Gestänge antreibbar, mittels dessen die Abstreifer über einen Hebel vor und zurück und/oder kreisförmig bewegbar sind. Ziel ist, dass mittels der Abstreifer die Stoffe, die von Abwasser mitgeführt werden und zwischen die Rechenstäbe gelangen, automatisch aus den Zwischenräumen der Rechenstäbe ausgetragen und zur Seite gefördert werden, so dass der freie Durchtrittsquerschnitt für das Abwasser zwischen den Rechenstäben erhalten bleibt.

Vorzugsweise ist die Einrichtung zur Räumung des Rechenguts bidirektional antreibbar. Das Rechengut wird somit durch hin und her bewegen der Einrichtung geräumt, insbesondere durch hin und her bewegen der zwischen den Rechenstäben angeordneten Abstreifer.

Insbesondere unter dem Aspekt der Reduzierung der Bauhöhe der Rechenvorrichtung wird es als besonders vorteilhaft angesehen, wenn der Antrieb für die Einrichtung zur Räumung des Rechenguts, insbesondere des Rechengutabstreifers, über eine Wasserrad-Gestänge-Mechanik erfolgt, wobei das Gestänge die Überfallwand durchdringt und diese Durchdringung der Überfallwand wasserdicht ausgeführt ist. Als besonders vorteilhaft wird es angesehen, wenn diese Durchdringung ausgeklinkt und mittels eines Vorsetzkastens wasserdicht gestaltet ist.

Die bei der Rechenvorrichtung Verwendung findenden Rechenstäbe können unterschiedlich gestaltet sein. Gemäß einer grundsätzlichen Gestaltung ist vorgesehen, dass die Rechenstäbe gebogen sind, insbesondere auf der Reinwasserseite konvex gebogen sind. Die mit dem Abwasser mitgeführten Stoffe werden somit in einem konkav gestalteten, der Abwasserseite zugewandten Bereich der Rundstäbe zurückgehalten. Insbesondere sind die Rundstäbe so angeordnet, dass sie sich über einen Winkel von 90 bis 180°, insbesondere über einen Winkel von 90° oder 120° erstrecken. Durch diese Anordnung baut die Rechenvorrichtung selbst bei gebogenen Rechenstäben relativ flach und benötigt nur eine relativ geringe Bauhöhe. - Alternativ ist vorgesehen, dass die Rechenstäbe im Wesentlichen gerade ausgebildet sind. In diesem Fall ist die Rechenvorrichtung vorzugsweise flach bauend gestaltet.

Die Erfindung schlägt eine Rechenvorrichtung vor, die insbesondere der Absicherung von Entlastungsschwellen im Misch- und Trennsystem, zur Absicherung von Gewässern vor Hygieneartikeln und Toilettenpapier dient. Die Rechenvorrichtung wird ohne Fremdenergie über ein Wasserrad angetrieben. Auch kann das Wasserrad eine Pumpe antreiben, die einen hydraulischen Kolben und/oder Motor des Rechengutabstreifers antreibt. Geräumt wird ein Feinrechen mit einem Stababstand von hauptsächlich 4 und 6 mm. Auch größere Stababstände sind möglich. Das Rechengut kann aufgrund der erfindungsgemäßen Gestaltung der Rechenvorrichtung schonend, auf kurzem Wege abgestreift werden. Die Anordnung von Ruhezonen ist möglich, die als flache, breite Querstreben ausgebildet sind, hierbei den Wasserdruck aufnehmen und insbesondere in eine Gitterrahmenkonstruktion, die vorzugsweise modular aufgebaut ist, abtragen. Je nach geforderter Leistung werden die Rechenstäbe gebogen angeordnet, so dass das Rechengut in tiefere Schichten abgesenkt wird und dort einfacher und mit weniger Strömungsdruck entsprechend vom ablaufenden Wasser zur Kläranlage abtransportiert werden kann. Die Rechenstäbe sind insbesondere so geformt, dass sie wie zwei Halbmonde aneinander gesetzt sind, die in den Rechenstab hereingreifen.

Weitere Merkmale der Erfindung sind in den Patentansprüchen, der Beschreibung der Figuren und den Figuren selbst dargestellt, wobei bemerkt wird, dass alle Einzelmerkmale und alle Kombinationen von Einzelmerkmalen weitere erfinderische Ausgestaltungen darstellen.

Die Erfindung ist in der Figur anhand mehrerer Ausführungsformen beispielsweise dargestellt, ohne auf diese beschränkt zu sein.

### Es zeigt:

- Figur 1: einen Schnitt quer zur Längserstreckung eines Kanals und einer den Kanal seitlich begrenzenden Überfallwand, mit der Rechenvorrichtung, die als Bogenrechen ausgebildet ist, sowie mit einem Wasserradantrieb für den Bogenrechen,
- Figur 2: einen modifizierten Wasserantrieb für den Bogenrechen, gleichfalls in einer Darstellung quer zur Längserstreckung des Kanals geschnitten,
- Figur 3: in einer Schnittdarstellung, quer zur Längserstreckung des Kanals, die Anordnung eines mittels eines Wasserrades angetriebenen Flachrechens,
- Figur 4: den in Figur 3 gezeigten Flachrechen in einer Schnittdarstellung in Längsrichtung des Kanals geschnitten.

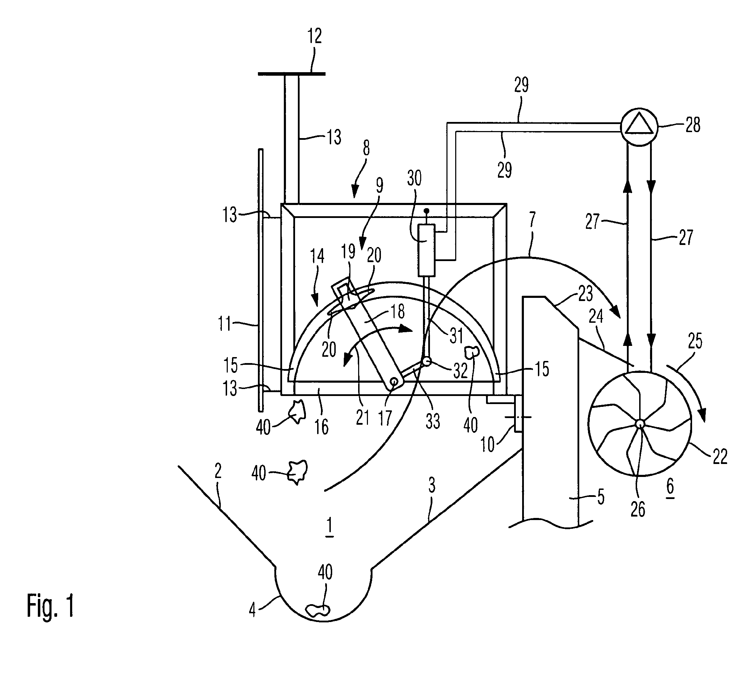

Figur 1 veranschaulicht einen Abwasserkanal 1 mit geneigten, sich aufeinander zu erstreckenden Bodenabschnitten 2 und 3 sowie einer die beiden Bodenabschnitte 2 und 3 im Bereich deren unteren Enden verbindenden Trockenwetterrinne 4. Seitlich wird der Abwasserkanal 1 im Bereich des Bodenabschnitts 3 durch eine sich wesentlich über das Niveau des Bodenabschnitts 3 hinaus erstreckende, vertikal angeordnete Überfallwand 5 begrenzt. Bei Betreiben der Kanalisation im Misch- oder Trennsystem kann, wenn erhöhte Abwasservolumenströme anfallen, ein Teil des Abwassers die Überfallwand 5 überströmen und gelangt von dort in einen neben der Überfallwand 5 befindlichen Entlastungskanal 6 und von dort in ein Gewässer/Vorfluter. Die mit einem Pfeil versehene Linie 7 verdeutlicht den Weg der Strömung ausgehend vom Abwasserkanal 1 in den Entlastungskanal 6 bei erhöhtem Abwasseranfall, insbesondere bei einem Regenereignis. Insbesondere bei Regen gelangen dann, wenn keine Rechenvorrichtung vorgesehen ist, erhebliche Mengen an Verschmutzungen wie z.B. Hygieneartikel, Papier und Kunststoffe in den Vorfluter/das Gewässer.

Oberhalb des Abwasserkanals 1 ist ein sich im Wesentlichen in der Länge des Abwasserkanals 1 erstreckender Rahmen 8 angeordnet, der der Aufnahme einer Rechenvorrichtung 9 dient. Der Rahmen 8 ist einerseits über Befestigungswinkel 10 mit der Überfallwand 5 auf der dem Abwasserkanal 1 zugewandten Seite und andererseits mit einer Kanalwand 11 und/oder einer Kanaldecke 12 mittels Streben 13 verbunden. Die mit dem Rahmen 8 verbundene Rechenvorrichtung 9 ist als Rundrechen ausgebildet, mit einer Vielzahl, bezogen auf die Blattebene der Figur 1 hintereinander angeordneter, identischer, im Wesentlichen halbkreisförmig gebogen gestalteter Rechenstäbe 14, wobei benachbarte Rechenstäbe einen Abstand von 4 bis 6 mm aufweisen und die beiden freien Ende 15 des jeweiligen Rechenstabs 14 nach unten gerichtet sind. Die Enden 15 sind mit dem Rahmen im Bereich einer unteren, horizontal angeordneten Strebe 16 verbunden. Der jeweilige Rechenstab ist somit auf der dem Kanal zugewandten Abwasserseite konkav und auf der dem Kanal abgewandten Seite, somit der Reinwasserseite, konvex ausgebildet. Der jeweilige Rechenstab erstreckt sich über einen Winkel von 180°, es sind aber auch kleinere Winkel denkbar, beispielsweise Winkel von 90 bis 120°, insbesondere ein Winkel von 90° oder ein Winkel von 120°.

Der jeweilige Rechenstab weist auf der Abwasserseite eine geringe Krümmung als auf der Reinwasserseite auf.

Im Bereich der halben Länge der Rahmenstrebe 16 ist in dieser, um eine Achse 17 frei schwenkbar, ein plattenförmiger Hebel 18 gelagert, wobei die großflächige Seite des Hebels 18 parallel zur großflächigen Seite des jeweiligen plattenförmigen Rechenstabes 14 und senkrecht zur Längserstreckung der Achse 17 angeordnet ist. Der Hebel 18 ist im Rahmen 8 auf einer halbkreisförmigen Bahn geführt und nimmt, zwischen benachbarten Streben 13 angeordnet, einen Abstreifer 19 auf. Dieser weist zwei radiale Enden 20 auf, die konisch zulaufend ausgebildet sind. Die Enden 20 befinden sich zwischen den benachbarten Rechenstäben 14.

Fällt ein überaus großer Abwasservolumenstrom an, mit der Konsequenz, dass Abwasser über die Überfallwand 5 tritt, werden im Abwasser mitgeschleppte Verschmutzungen, die mit der Bezugsziffer 40 bezeichnet sind, wie z.B. Hygieneartikel, Papier und Kunststoffe, beim Durchtritt des Abwassers durch die Rechenvorrichtung von unten nach oben von den Rechenstäben 14 zurückgehalten. Mittels der in den Richtungen des Doppelpfeils 21 hin und her verschwenkbaren Hebel 18 und der mit diesen verbundenen Abstreifer 19 wird das Rechengut geräumt. Die Hebel 18 werden so weit verschwenkt, dass die Abstreifer 19 das Rechengut bis zu den Enden 15 der Rechenstäbe 14 austragen.

Angetrieben werden die Hebel 18 mit den Abstreifern 19 mittels eines Wasserrades 22. Es existiert somit ein fremdenergiefreier Antrieb, wobei das Wasserrad 22 in Strömungsrichtung des Abwassers hinter der Überfallwand 5 angeordnet ist. Das Abwasser gelangt, wie der Pfeillinie 7 zu entnehmen ist, hinter der mit einer Schräge 23 versehenen Überfallwand 5 auf ein im unteren Bereich der Schräge 23 mit der Überfallwand 5 verbundenes schräg angeordnetes Ableitblech 24 und von dort oben auf das Wasserrad 22, das im Uhrzeigersinn gemäß Pfeilrichtung 25 rotiert. Das Wasserrad 22 treibt über seine Wasserradwelle 26 zunächst einen Riemen 27 an, und über diesen eine Pumpe 28, insbesondere eine Hydraulikpumpe. Diese Pumpe 28 ist über Druckleitungen 29 mit einem im Rahmen 8 gelagerten Kolben 30 verbunden, dessen Kolbenstange 31 über ein im Abstand zur Achse 17 angeordnetes Gelenk 32 mit einem Ansatz 33 verbunden ist, wobei dieser Ansatz 33 mit allen Rechenstäben verbunden ist. Nicht gezeigt ist die Steuerung der Hydraulik, die bewirkt, dass beim Erreichen der Endstellung der Abstreifer benachbart des einen Endes 15 der Rechenstäbe 14 die Schwenkbewegung der Hebel 18 in Richtung des anderen Endes 15 der Rechenstäbe 14 umsteuert, womit eine kontinuierliche Reinigungswirkung des Rechens gewährleistet ist.

Bei der in Figur 1 veranschaulichten Ausführungsform sind die Mittel, die die Bewegung des Wasserrades 22 auf die Hebel 17 und die Abstreifer 19 übertragen, außerhalb der Überfallwand 5 angeordnet und befinden sich insbesondere oberhalb des maximalen Flüssigkeitsniveaus.

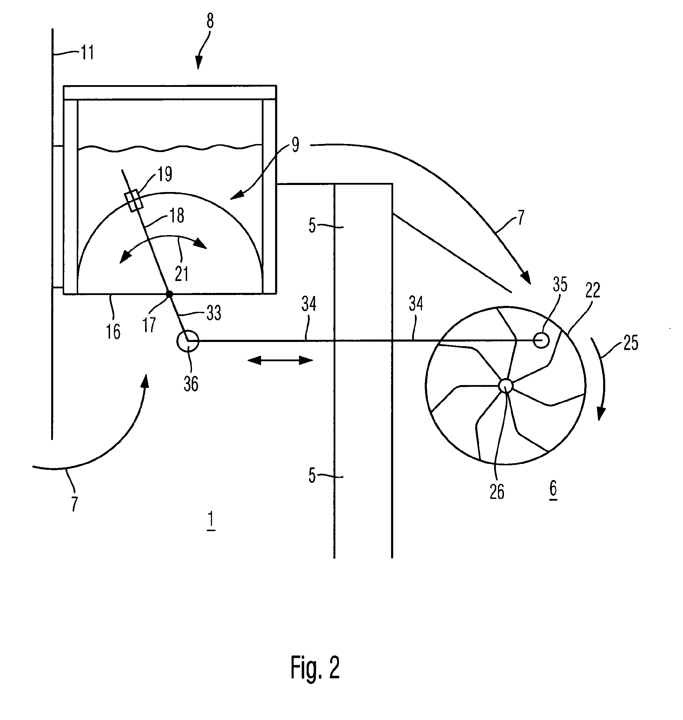

Bei der Ausführungsform nach der Figur 2 hingegen sind die Mittel, die die Bewegung des Wasserrades 22 auf die Hebel 18 und die Abstreifer 19 übertragen durch eine Öffnung bzw. Bohrung in der Überfallwand 5 hindurchgeführt. Es ist hierfür eine Wasserrad-Gestänge-Mechanik vorgesehen. Das Gestänge 34 durchdringt die Überfallwand 5 und ist mittels eines Schwenklagers 35 im Wasserrad 22 und mittels eines Schwenklagers 36 im Ansatz 33 gelagert. Auch bei der in Figur 2 veranschaulichten Ausführungsform ist die Rechenvorrichtung als Bogenrechen ausgebildet. Es wird insofern auf die Ausführungen betreffend die in Figur 1 beschriebene Variante verwiesen.

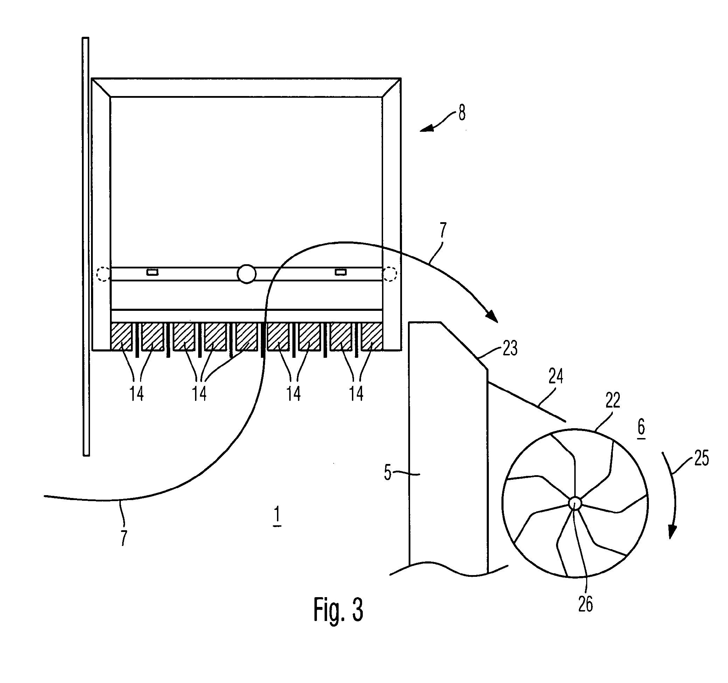

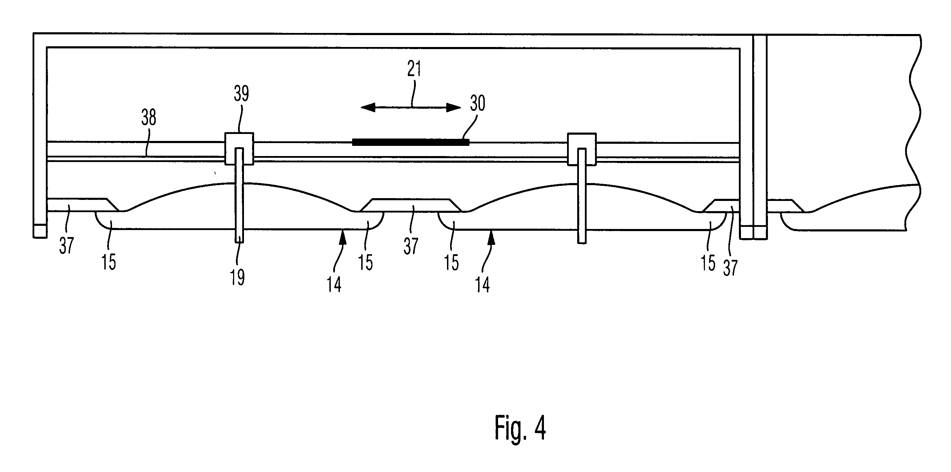

Bei der Ausführungsform gemäß der Figuren 3 und 4 handelt es sich demgegenüber um einen Flachrechen. Bei diesem sind im Bereich des unteren Endes des Rahmens 8 eine Vielzahl parallel angeordneter Rechenstäbe 14, die horizontal angeordnet sind, gelagert. Im konkreten Ausführungsbeispiel sind die aus Blech gebildeten Rechenstäbe 14 nicht nur parallel zueinander angeordnet, sondern es sind in der jeweiligen Ebene auch mehrere Rechenstäbe 14 hintereinander angeordnet, von denen zwei Rechenstäbe 14 vollständig gezeigt sind. Der jeweilige Rechenstab 14 verjüngt sich ausgehend von seiner Mitte zu seinen beiden Enden 15, bezogen auf die Darstellung in Figur 4. Im Bereich der beiden Enden 15 sind die Rechenstäbe 14 reinwasserseitig mit Flacheisen 37 verbunden, die im Rahmen 8 gelagert sind. Im Rahmen 8 sind ferner auf der Reinwasserseite der Rechenstäbe 14 horizontal angeordnete Führungsschienen 38 gelagert, die Lagerelemente 39 zur Aufnahme der diversen zwischen benachbarten Rechenstäben 14 angeordneten Abstreifer 19 aufnehmen. Der jeweilige Aufnehmer ist zwischen den Enden 15 benachbarter Rechenstäbe 14 hin und her verfahrbar und durchsetzt den lichten Querschnitt zwischen diesen Rechenstäben 14. Mittels eines Zylinders 30, der im Sinne der Kinematik gemäß der Figur 1 über das Wasserrad 22 beaufschlagbar ist, lassen sich die Lagerelemente 39 mit den Abstreifern 19 hin und her verfahren, wobei alle Abstreifer 19 synchron entweder in die eine Richtung oder in die entgegengesetzte Richtung gemäß Doppelpfeil 21 bewegt werden.

## Patentansprüche

1. Rechenvorrichtung (9) mit einer Einrichtung (19) zur Räumung von Rechengut, insbesondere zur Rückhaltung von in einem Abwasser mitgeführten Feststoffen an Entlastungen, ferner mit einem Antrieb (22) für die Einrichtung (19) zur Räumung des Rechenguts, wobei die Einrichtung (19) zur Räumung des Rechenguts in Strömungsrichtung des Abwassers vor einer Überfallwand (5) angeordnet ist und die Rechenvorrichtung (9) von unten nach oben vom Abwasser durchströmt wird, **dadurch gekennzeichnet, dass** die Einrichtung (19) zur Räumung des Rechenguts fremdenergiefrei über ein Wasserrad (22) antreibbar ist, wobei das Wasserrad (22) in Strömungsrichtung des Abwassers hinter der Überfallwand (5) angeordnet ist.

2. Vorrichtung nach Anspruch 1, **dadurch gekennzeichnet, dass** die Einrichtung (19) zur Räumung des Rechenguts bidirektional antreibbar ist.

3. Vorrichtung nach Anspruch 1 oder 2, **dadurch gekennzeichnet, dass** mittels des Wasserrades (22) eine Pumpe (28) antreibbar ist, mittels derer ein Kolben und/oder Motor zum Beaufschlagen der Einrichtung (19) zur Räumung des Rechenguts antreibbar ist.

4. Vorrichtung nach Anspruch 3, **dadurch gekennzeichnet, dass** die Pumpe (28) mittels eines vom Wasserrad (22) antreibbaren Riementriebes (27) antreibbar ist.

5. Vorrichtung nach einem der Ansprüche 1 bis 4, **dadurch gekennzeichnet, dass** die Einrichtung (19) zur Räumung des Rechenguts als Rechengutabstreifer (19) ausgebildet ist.

6. Vorrichtung nach einem der Ansprüche 1 bis 5, **dadurch gekennzeichnet, dass** die Rechenvorrichtung (9) eine Vielzahl von Rechenstäben (14) aufweist, und die Einrichtung (19) zur Räumung des Rechenguts zwischen den Rechenstäben (14) angeordnete, verfahrbare Abstreifer (19) aufweist.

7. Vorrichtung nach Anspruch 5 oder 6, **dadurch gekennzeichnet, dass** mittels des Wasserrades (22) ein Gestänge (34) antreibbar ist, mittels dessen die Abstreifer (19) über einen Hebel (20) vor und zurück und/oder kreisförmig bewegbar sind.

8. Vorrichtung nach einem der Ansprüche 1 bis 7, **dadurch gekennzeichnet, dass** der Antrieb (22) für die Einrichtung (19) zur Räumung des Rechenguts, insbesondere des Rechengutabstreifers (19), über eine Wasserrad-Gestänge-Mechanik erfolgt, wobei das Gestänge (34) die Überfallwand (5) durchdringt und die Durchdringung der Überfallwand (5) wasserdicht ausgeführt ist.

9. Vorrichtung nach einem der Ansprüche 1 bis 7, **dadurch gekennzeichnet, dass** der Antrieb (22) für die Einrichtung (19) zur Räumung des Rechenguts, insbesondere des Rechengutabstreifers (19), über eine Wasserrad-Gestänge-Mechanik erfolgt, wobei das Gestänge (34) die Überfallwand (5) durchdringt und diese Durchdringung ausgeklinkt und mittels eines Vorsetzkastens wasserdicht gestaltet ist.

10. Vorrichtung nach einem der Ansprüche 6 bis 9, **dadurch gekennzeichnet, dass** die Rechenstäbe (14) gebogen sind, insbesondere auf der Reinwasserseite konvex gebogen sind.

11. Vorrichtung nach Anspruch 10, **dadurch gekennzeichnet, dass** die Rechenstäbe (14) über einen Winkel von 90 bis 180°, vorzugsweise über eine Winkel von 90 bis 120°, insbesondere über einen Winkel von 90° oder 120° angeordnet sind.

12. Vorrichtung nach einem der Ansprüche 6 bis 9, **dadurch gekennzeichnet, dass** die Rechenstäbe (14) im Wesentlichen gerade ausgebildet sind.

13. Vorrichtung nach Anspruch 12, **dadurch gekennzeichnet, dass** die Rechenvorrichtung (9) flach bauend ist.
